# EUROPEAN PATENT APPLICATION

(11) **EP 4 611 370 A1**
(43) Date of publication of application: **03.09.2025**
(21) Application number: 24753591.7
(22) Date of filing: 06.02.2024
(51) Int. Cl.: H04N 19/30, H04N 19/136, H04N 19/70, H04N 19/184, G06T 9/00

(54) **ELECTRONIC DEVICE AND METHOD FOR PROCESSING SCALABLE CODEC IN ELECTRONIC DEVICE**

(30) Priority: 09.02.2023 KR 20230017175; 15.03.2023 KR 20230034129
(71) Applicant: Samsung Electronics Co., Ltd., Suwon-si, Gyeonggi-do 16677 (KR)
(72) Inventor: PARK, Chansik, Suwon-si Gyeonggi-do 16677 (KR); YEOM, Donghyun, Suwon-si Gyeonggi-do 16677 (KR)
(74) Representative: HGF
(86) International application number: PCT/KR2024/001713
(87) International publication number: WO 2024/167266

(57) **Abstract**

According to an embodiment, an electronic device comprises a communication circuit, a processor, and a memory. The electronic device may determine scalability information applicable to an original image. The electronic device may generate a base layer (BL) image for the original image on the basis of at least one of the resolution, color gamut, gamma, bit depth, or bitrate of the original image. The electronic device may generate at least one artificial intelligence (AI) network on the basis of the original information, the scalability information about the original image, and the BL image. The electronic device may compress the BL image and control the communication circuit to transmit a bitstream including the compressed BL image and configuration information about the at least one AI network to an external electronic device. Various other embodiments are possible.

## Description

### [Technical Field]

The disclosure relates to a technique for processing a scalable codec in an electronic device.

### [Background Art]

A scalable codec may be implemented as, for example, a scalable video codec (SVC) based on H.264 or a scalable HEVC (SHVC) based on high efficiency video coding (HEVC). Both the SVC and the SHVC may include a base layer (BL) serving as a base and an enhanced layer (EL) for obtaining a final scalable result value based on the BL.

SVC may be the name of the Annex G extension of the H.264/MPEG-4 AVC video compression standard. The SVC and/or the SHVC may process encoding of a high-quality video bitstream containing one or more subset bitstreams (e.g., layered coding).

### [Detailed Description of the Invention]

### [Technical Solution]

According to an embodiment, an electronic device may include a communication circuit, a processor, and memory. The electronic device may determine information on a scalabilityapplicable to an original image. The electronic device may generate a base layer (BL) image for the original image, based on at least one of a resolution, a color gamut, a gamma, a frame rate, a bit depth, or a bit rate of the original image. The electronic device may generate at least one artificial intelligence (AI) network, based on the original image, the information on the scalability for the original image, and the BL image. The electronic device may compress the BL image, and control the communication circuit to transmit a bitstream including the compressed BL image and configuration information for the at least one AI network to an external electronic device. According to an embodiment, the BL image may have a different view port from that of an enhanced layer (EL) image. The BL image and the EL image may be implemented (or generated) to have a scalability for multiple views.

According to an embodiment, an electronic device may include a communication circuit, a processor, and memory. The electronic device may receive, from an external electronic device, a bitstream including a compressed BL image and configuration information for at least one AI network. The electronic device may determine at least one scalability based on the configuration information for the at least one AI network. The electronic device may configure at least one AI network for the at least one scalability. The electronic device may obtain an enhanced layer (EL) image using the BL image and the at least one AI network.

According to an embodiment, a method of operating an electronic device may include determining information on a scalability applicable to an original image. The method of operating the electronic device may include generating a BL image for the original image, based on at least one of a resolution, a color gamut, a gamma, a frame rate, a bit depth, or a bit rate of the original image. The method of operating the electronic device may include generating at least one AI network, based on the original image, the information on the scalability for the original image, and the BL image. The method of operating the electronic device may include compressing the BL image, and transmitting a bitstream including the compressed BL image and configuration information for the at least one AI network to an external electronic device. According to an embodiment, the BL image may have a different view port from that of an EL image. The BL image and the EL image may be implemented (or generated) to have a scalability for multiple views.

According to an embodiment, a method of operating an electronic device may include receiving, from an external electronic device, a bitstream including a compressed BL image and configuration information for at least one AI network. The method of operating the electronic device may include determining at least one scalability based on the configuration information for the at least one AI network. The method of operating the electronic device may include configuring at least one AI network for the at least one scalability. The method of operating the electronic device may include obtaining an EL image using the BL image and the at least one AI network.

According to an embodiment, in a computer-readable storage medium storing at least one instruction, the at least one instruction, when executed by at least one processor, may cause an electronic device to perform a plurality of operations. The plurality of operations may include determining information on a scalability applicable to an original image. The plurality of operations may include generating a BL image for the original image, based on at least one of a resolution, a color gamut, a gamma, a frame rate, a bit depth, or a bit rate of the original image. The plurality of operations may include generating at least one AI network, based on the original image, the information on the scalability for the original image, and the BL image. The plurality of operations may include compressing the BL image, and transmitting a bitstream including the compressed BL image and configuration information for the at least one AI network to an external electronic device. According to an embodiment, the BL image may have a different view port from that of an EL image. The BL image and the EL image may be implemented (or generated) to have a scalability for multiple views.

According to an embodiment, in a computer-readable storage medium storing at least one instruction, the at least one instruction, when executed by at least one processor, may cause an electronic device to perform a plurality of operations. The plurality of operations may include receiving, from an external electronic device, a bitstream including a compressed BL image and configuration information for at least one AI network. The plurality of operations may include determining at least one scalability based on the configuration information for the at least one AI network. The plurality of operations may include configuring at least one AI network for the at least one scalability. The plurality of operations may include obtaining an EL image using the BL image and the at least one AI network.

### [Brief Description of Drawings]

FIG. 1 is a block diagram illustrating an electronic device in a network environment according to an embodiment of the disclosure.
FIG. 2 illustrates an example of a codec having spatial scalability among scalable video codecs (SVCs).
FIG. 3 illustrates an example of a codec having color gamut scalability among SVCs.
FIG. 4 is a diagram illustrating a plurality of AI network-based scalabilities according to an embodiment of the disclosure.
FIG. 5 illustrates an example of obtaining a final image through an AI network corresponding to each of a plurality of scalabilities according to an embodiment of the disclosure.
FIG. 6 illustrates an example of obtaining a final image by combining AI networks corresponding to a plurality of scalabilities according to an embodiment of the disclosure.
FIG. 7 is a diagram illustrating operations of a transmitter and a receiver according to an embodiment of the disclosure.
FIG. 8 illustrates an example of AI network configuration information in a bitstream according to an embodiment of the disclosure.
FIG. 9 illustrates an example of AI network configuration information according to an embodiment of the disclosure.
FIG. 10 illustrates an example of bitstream transmission and interpretation in a transmitter and a receiver according to an embodiment of the disclosure.
FIG. 11 illustrates an example of a method of pre-transmitting and configuring AI IDs and information about networks in a package according to an embodiment of the disclosure.
FIG. 12 illustrates an example of AI network configuration and processing in a receiver according to an embodiment of the disclosure.
FIG. 13 is a diagram illustrating an operation of a transmitter according to an embodiment of the disclosure.
FIG. 14 is a diagram illustrating an operation of a receiver according to an embodiment of the disclosure.

### [Mode for Carrying out the Invention]

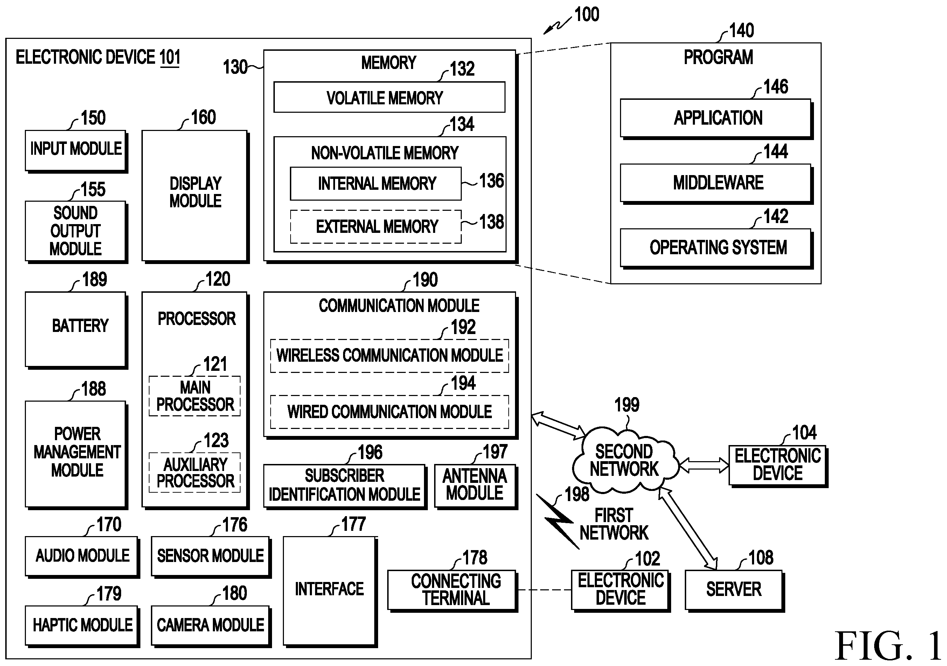

FIG. 1 is a block diagram illustrating an electronic device in a network environment according to an embodiment of the disclosure.

Referring to FIG. 1, an electronic device 101 in a network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the strength of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beamforming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to an embodiment, the antenna module 197 may form an mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B", "at least one of A and B", "at least one of A or B", "A, B, or C", "at least one of A, B, and C", and "at least one of A, B, or C", may include any one of, or all possible combinations of the items enumerated together in a corresponding one of the phrases. As used herein, such terms as "1^{st}" and "2^{nd}", or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with", "coupled to", "connected with", or "connected to" another element (e.g., a second element), it means that the element may be coupled with the other element directly (e.g., wiredly), wirelessly, or via a third element.

As used in connection with embodiments of the disclosure, the term "module" may include a unit implemented in hardware, software, or firmware, and may interchangeably be used with other terms, for example, logic, logic block, part, or circuitry. A module may be a single integral component, or a minimum unit or part thereof, adapted to perform one or more functions. For example, according to an embodiment, the module may be implemented in a form of an application-specific integrated circuit (ASIC).

Embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to an embodiment, each component (e.g., a module or a program) of the above-described components may include a single entity or multiple entities, and some of the multiple entities may be separately disposed in different components. According to an embodiment, one or more of the above-described components may be omitted, or one or more other components may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to an embodiment, operations performed by the module, the program, or another component may be carried out sequentially, in parallel, repeatedly, or heuristically, or one or more of the operations may be executed in a different order or omitted, or one or more other operations may be added.

In an embodiment of the disclosure, a method of improving bit efficiency by applying an artificial intelligence (AI)-based image processing technology to a scalable video codec (SVC) is proposed. Owing to the bit efficiency improvement, a transmitter may transmit a plurality of scalabilities based on information about a plurality of AI networks to a receiver, and the receiver may selectively use various scalabilities. The transmitter may define configuration information for an AI network and transmit the configuration information for the AI network to the receiver. The receiver may process an image by interpreting the received configuration information for the AI network. In an embodiment of the disclosure, the transmitter may refer to an electronic device that transmits information, a message, and/or a bitstream, and the receiver may refer to an electronic device that receives information, a message, and/or a bitstream.

In the SVC, the transmitter may keep (or store) an original image to which scalability may be applied, and thus the original image may be used as ground truth in configuring an AI network. The transmitter may transmit configuration information for various AI networks to the receiver. The receiver may configure the same AI network as that of the transmitter based on the AI network configuration information transmitted from the transmitter. The receiver may obtain (or receive) an enhanced layer (EL) image with scalability by inputting a base layer (BL) image to the AI network.

A scalable codec may be implemented as, for example, a scalable video codec (SVC) based on H.264 or a scalable HEVC (SHVC) based on high efficiency video coding (HEVC). Both the SVC and the SHVC may include a BL and an EL for obtaining a final scalable result value based on the BL.

According to an embodiment, scalability may be implemented as spatial scalability, temporal scalability, and/or signal-to-noise ratio (SNR) scalability. According to an embodiment, scalability may be implemented as a hybrid codec for delivering different heterogeneous codecs, and/or color gamut and bit depth scalability for scaling a color gamut and a bit depth.

Using the SVC technology, a standard dynamic range (SDR) image may be transmitted in the BL and a high dynamic range (HDR) image may be transmitted in the EL. Depending on its decoding capability, the receiver may provide only an SDR image, or when it is capable of HDR processing, the receiver may provide even an HDR image using the EL. For example, in the SVC, the transmitter generates an SDR image corresponding to the BL using an HDR image corresponding to the EL as an original image, and the receiver may generate the HDR image corresponding to the EL again using the SDR image corresponding to the BL provided from the transmitter.

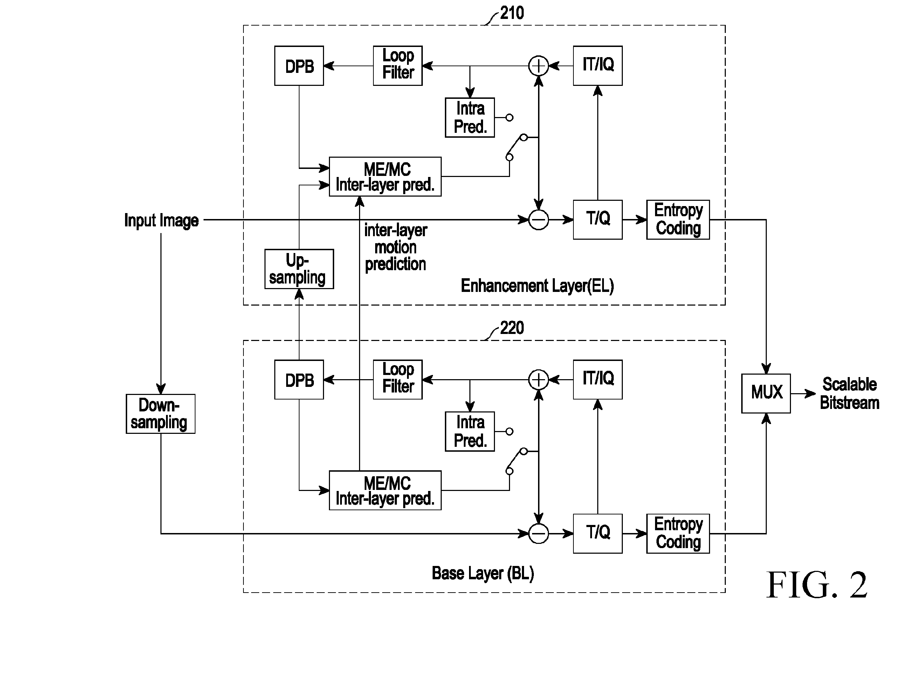

FIG. 2 illustrates an example of a codec having spatial scalability among SVCs.

An electronic device (e.g., the electronic device 101 of FIG. 1) may obtain a scalable bitstream from an input image (or original image) through an EL 210 and a BL 220.

The EL 210 may include a decoded picture buffer (DPB), a loop filter, an intra-prediction module, an inverse transform/inverse quantization (IT/IQ) module, a motion estimation/motion compensation (ME/MC) inter-layer prediction module, a transform/quantization (T/Q) module, an entropy encoding module, and an up-sampling module. The BL 220 may include a DPB, a loop filter, an intra-prediction module, an IT/IQ module, an ME/MC inter-layer prediction module, a T/Q module, and an entropy encoding module.

The electronic device may process the input image (or original image) through the EL 210, process a down-sampled input image (or original image) through the BL 220, and input each processing result to a multiplexer (MUX), thereby obtaining a scalable bitstream.

When the input image (or original image) of the electronic device is a high-resolution image (e.g., ultra high definition (UHD)-level image), the electronic device may apply down-scaling to the input image (or original image) to generate a BL image. The BL image generated by applying down-scaling to the input image (or original image) has a lower resolution (e.g., full high definition (FHD)-level image) than the input image (or original image), and may be encoded independently. The encoded BL image may be implemented as a bitstream into which, for example, the FHD-level image is compressed.

When encoding the EL image, the electronic device may use an image obtained by up-scaling a restored image (e.g., FHD-level image) of the BL image, as one of reference pictures. The electronic device may use an image obtained by up-scaling the same original image processed in the BL 220 as one of reference pictures in the EL 210, thereby improving compression efficiency. For example, when the electronic device uses the SVC, the bit efficiency may be improved by approximately 30%, compared to data in which the BL 220 and the EL 210 are separately compressed.

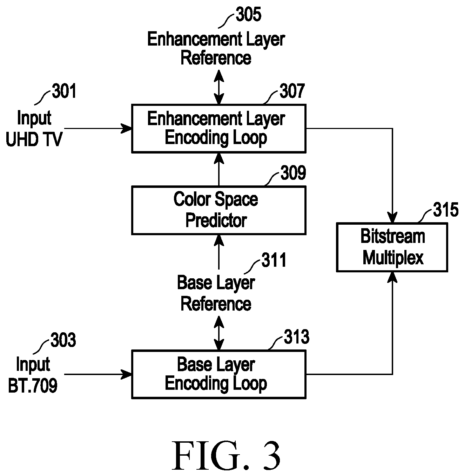

FIG. 3 illustrates an example of a codec having color gamut scalability among SVCs.

BT.2020 (e.g., a wider color gamut than BT.709) corresponding to a UHD TV input 301 may be input to an EL encoding loop 307, and for example, BT.709 303 corresponding to SDR may be input to a BL encoding loop 313.

An electronic device (e.g., the electronic device 101 of FIG. 1) may obtain a BL reference 311 through the BL encoding loop 313 and perform color space prediction 309 using the BL reference 311. The electronic device may use a result of the color space prediction 309 and an EL reference 305 in the EL encoding loop 307. The electronic device may perform bitstream multiplexing 315 based on a result of the BL encoding loop 313 and a result of the EL encoding loop 307.

As in the examples of spatial scalability in FIG. 2 and color gamut scalability in FIG. 3, the SVC may commonly have a reference picture corresponding to a BL (e.g., the BL 220 and the BL encoding loop 313), and in order to obtain an EL image (e.g., an image processed through an EL) corresponding to scalability, a BL image (e.g., an image processed through the BL) that may be referenced on the time axis may be first decoded and used as one of reference pictures for ME/MC.

In the SVC, the receiver may selectively decode only the BL image or decode up to the EL image with scalability according to its device capability, thereby selectively performing decoding according to the device capability. For example, when the maximum decoding resolution capability of device A is FHD, the maximum decoding resolution capability of device B is UHD, and a bitstream with spatial scalability using the SVC is encoded into FHD for a BL image and into UHD for an EL image, device A may decode the FHD of the BL image from the same bitstream, and device B may decode up to the EL image to receive the UHD-level image.

However, when the SVC is used, BL image decoding should always precede to decode the EL image corresponding to scalability, and the BL image should be generated like the EL image corresponding to scalability by actually decoding the BL image in the middle of an EL image decoding process, and used as a reference picture during the encoding of the EL image, which may be complex. When a picture from the BL image is to be used as a reference picture, additional memory may be required.

In an embodiment of the disclosure, a transmitter (or a first electronic device) may simultaneously transmit BL compressed data (e.g., data compressed in a BL) and information about at least one AI network (or configuration information for the AI network) for scalability to a receiver (or a second electronic device). The receiver may obtain an image corresponding to a desired scalability (e.g., spatial, temporal, SNR, heterogeneous codec, or color gamut) by using the information about the at least one AI network. The transmitter (or the first electronic device) may define information about various AI networks (or configuration information for the AI networks) in a bitstream. The transmitter may transmit a plurality of scalabilities to the receiver by using the information for the AI networks (or configuration information for the AI networks) having a smaller data size than an existing EL image. The receiver may select and/or configure an AI network corresponding to a desired scalability and generate an image of the corresponding scalability.

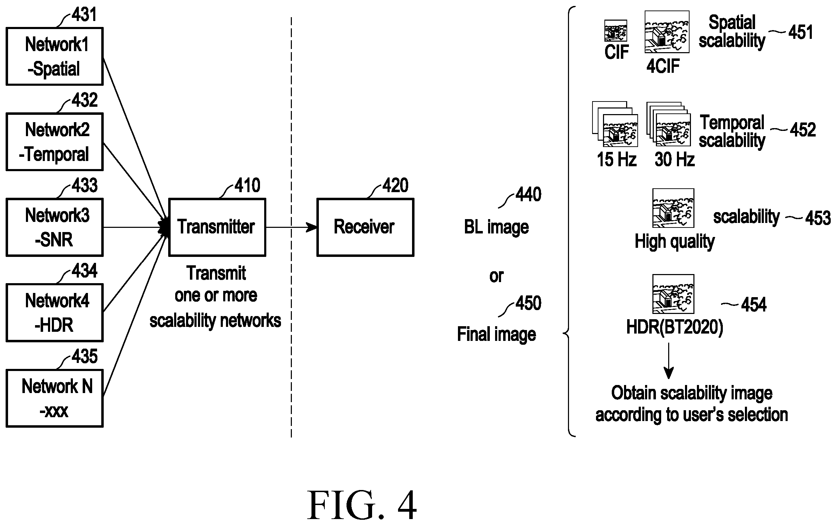

FIG. 4 is a diagram illustrating a plurality of AI network-based scalabilities according to an embodiment of the disclosure.

In FIG. 4, a transmitter 410 may be implemented as an electronic device (e.g., the electronic device 101 of FIG. 1) that transmits information, a message, and/or a bitstream, and a receiver 420 may be implemented as an electronic device (e.g., the electronic device 102 or the electronic device 104 of FIG. 1) that receives information, a message, and/or a bitstream.

The transmitter 410 and/or the receiver 420 may support one or more scalabilities simultaneously by a scalable codec using a plurality of AI networks 431 to 435. The receiver 420 may decode a BL image 440 serving as a basis using at least one of the AI networks (at least one of the AI networks 431 to 435) configured by the transmitter 410, and obtain a final image (target video) 450 using a configuration of an AI network of a scalability desired by the receiver 420.

The transmitter 410 may support transmission and/or reception of images corresponding to a plurality of scalabilities by configuring the plurality of AI networks 431 to 435. For example, a first AI network 431 may provide and/or support spatial scalability, a second AI network 432 may provide and/or support temporal scalability, a third AI network 433 may provide and/or support SNR scalability, a fourth AI network 434 may provide and/or support HDR scalability, and a fifth AI network 435 may provide and/or support a specific scalability (xxx spatial scalability). The number and/or types of AI networks according to an embodiment of the disclosure are not limited.

The transmitter 410 may transmit information or configuration information for at least one of the plurality of AI networks 431 to 435 to the receiver 420. The transmitter 410 may keep (e.g., store) an original image to which a scalability (spatial scalability) is applied. The transmitter 410 may convert and/or compress the original image into the BL image 440 and transmit it to the receiver 420.

According to an embodiment, the receiver 420 may obtain a final image 450 to which spatial scalability 451 is applied based on information about the first AI network 431. According to an embodiment, the receiver 420 may obtain a final image 450 to which temporal scalability 452 is applied based on information about the second AI network 432. According to an embodiment, the receiver 420 may obtain a final image 450 to which SNR scalability 453 is applied based on information about the third AI network 433. According to an embodiment, the receiver 420 may obtain a final image 450 to which HDR scalability 454 is applied based on information about the fourth AI network 434. According to an embodiment, the receiver 420 may determine at least one scalability to be applied to the final image 450 in response to a user selection or input. According to an embodiment, the receiver 420 may select a plurality of scalabilities in response to a user selection or input and obtain a final image 450 to which the plurality of scalabilities are applied.

According to an embodiment, the transmitter 410 may include a communication circuit (e.g., the communication module 190 of FIG. 1) and at least one processor (e.g., the processor 120 of FIG. 1) that performs at least one operation described above. According to an embodiment, the receiver 410 may include a communication circuit (e.g., the communication module 190 of FIG. 1) and at least one processor (e.g., the processor 120 of FIG. 1) that performs at least one operation described above.

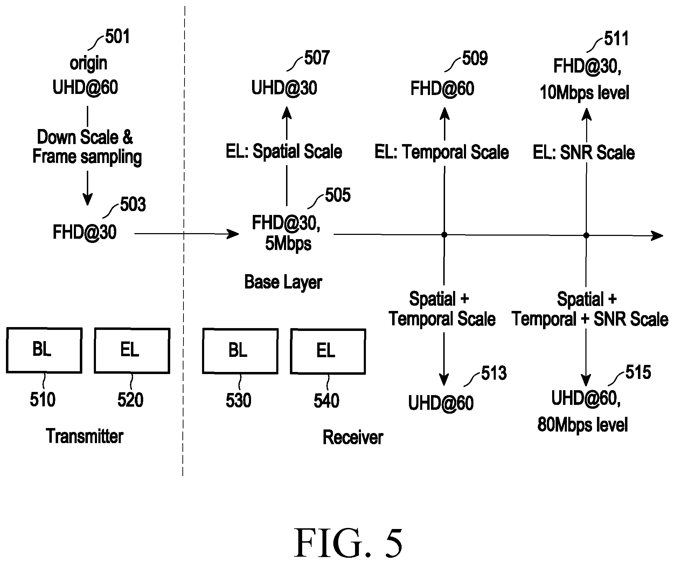

FIG. 5 illustrates an example of obtaining a final image through an AI network corresponding to each of a plurality of scalabilities according to an embodiment of the disclosure.

In FIG. 5, a transmitter may be implemented as an electronic device (e.g., the electronic device 101 of FIG. 1) that transmits information, a message, and/or a bitstream, and a receiver may be implemented as an electronic device (e.g., the electronic device 102 or the electronic device 104 of FIG. 1) that receives information, a message, and/or a bitstream. The transmitter may include a BL module 510 for processing a BL image and an EL module 520 for processing an EL image. The receiver may include a BL module 530 for processing a BL image and an EL module 540 for processing an EL image.

According to an embodiment, the transmitter may include a communication circuit (e.g., the communication module 190 of FIG. 1) and at least one processor (e.g., the processor 120 of FIG. 1) that performs at least one operation described above. According to an embodiment, the receiver may include a communication circuit (e.g., the communication module 190 of FIG. 1) and at least one processor (e.g., the processor 120 of FIG. 1) that performs at least one operation described above.

The transmitter may apply down-scaling and frame sampling to an original image 501 having the characteristics of UHD 60fps using the BL module 510 and generate a BL image 503 having the characteristics of FHD 30fps. The BL image 503 may be compressed to a bit rate (e.g., 5Mbps) lower than SNR scalability to be decoded later. The receiver may receive a compressed BL image 505 having the characteristics of FHD 30fps 5Mbps from the transmitter.

According to an embodiment, the receiver may apply spatial scalability to the compressed BL image 505 using the EL module 540 and generate a first EL image 507 having the characteristics of UHD 30fps. According to an embodiment, the receiver may apply temporal scalability to the compressed BL image 505 using the EL module 540 and generate a second EL image 509 having the characteristics of FHD 60fps. According to an embodiment, the receiver may apply SNR scalability to the compressed BL image 505 using the EL module 540 and generate a third EL image 511 having the characteristics of FHD 30fps 10Mbps. According to an embodiment, the receiver may apply spatial and/or temporal scalability to the compressed BL image 505 using the EL module 540 and generate a fourth EL image 513 having the characteristics of UHD 60fps. According to an embodiment, the receiver may apply spatial, temporal, and/or SNR scalability to the compressed BL image 505 using the EL module 540 and generate a third EL image 515 having the characteristics of UHD 60fps 80Mbps. The case of FIG. 5 is an example having an AI network for an EL image corresponding to each final scalability. In this case, information on a scalability from the transmitter may represent information about a combination of a plurality of scalabilities. For example, for UHD@60, spatial and/or temporal may be simultaneously indicated by scalability index information. Information about image characteristics (e.g., resolution, color gamut, gamma, frame rate (fps), bit depth, and/or bit rate) corresponding to an EL image that may be processed in the EL module 540 may be added, and the receiver may select and apply an AI network corresponding to a desired EL image based on the information.

In an embodiment of the disclosure, without compressing and transmitting an EL image for which final scalability may be created using a BL image, the BL image may be decoded and then each EL image (or result image) may be obtained directly by applying an AI network corresponding to each scalability to the BL image. According to an embodiment, only a resolution and fps characteristics are required for the scalability result image, and since it is not an image in a compressed format, bps characteristics may not be required. However, in the case of SNR scalability, the degree of image quality may be expressed as FHD 30fps 10Mbps-level image quality or UHD 60fps 80Mbps-level image quality in order to represent the degree of image quality. According to an embodiment, for [in] temporal scalability or [SNR] spatial scalability, the transmitter may set FHD 60fps down-scaled from the original image, UHD 60fps in an original scalability as the ground truth of the BL image, FHD 30fps, when configuring an AI network, and set UHD 60fps as the ground truth, when configuring an AI network of temporal and spatial scalabilities.

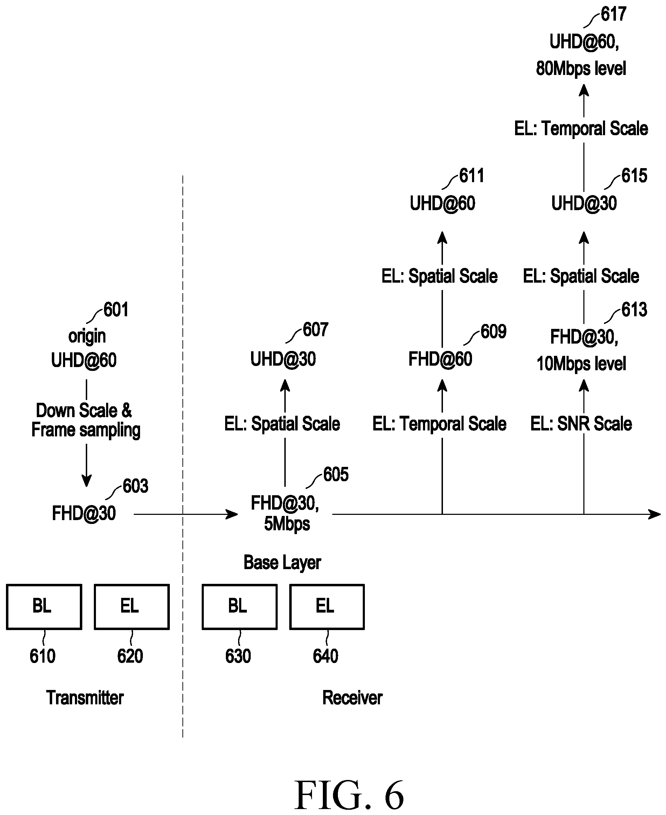

FIG. 6 illustrates an example of obtaining a final image by a combination of AI networks corresponding to a plurality of scalabilities according to an embodiment of the disclosure.

In FIG. 6, a transmitter may be implemented as an electronic device (e.g., the electronic device 101 of FIG. 1) that transmits information, a message, and/or a bitstream, and a receiver may be implemented as an electronic device (e.g., the electronic device 102 or the electronic device 104 of FIG. 1) that receives information, a message, and/or a bitstream. The transmitter may include a BL module 610 for processing a BL image and an EL module 620 for processing an EL image. The receiver may include a BL module 630 for processing a BL image and an EL module 640 for processing an EL image.

According to an embodiment, the transmitter may include a communication circuit (e.g., the communication module 190 of FIG. 1) and at least one processor (e.g., the processor 120 of FIG. 1) that performs at least one operation described above. According to an embodiment, the receiver may include a communication circuit (e.g., the communication module 190 of FIG. 1) and at least one processor (e.g., the processor 120 of FIG. 1) that performs at least one operation described above.

The transmitter may generate a BL image 603 having the characteristics of FHD 30fps by applying down-scaling and frame sampling to an original image 601 having the characteristics of UHD 60fps using the BL module 610. The BL image 603 may be compressed to a bit rate (e.g., 5Mbps) lower than SNR scalability to be decoded later. The receiver may receive a compressed BL image 605 having the characteristics of FHD 30fps 5Mbps from the transmitter.

According to an embodiment, the receiver may generate a first EL image 607 having the characteristics of UHD 30fps by applying spatial scalability to the compressed BL image 605 using the EL module 640. According to an embodiment, the receiver may generate a second EL image 609 having the characteristics of FHD 60fps by applying temporal scalability to the compressed BL image 605 using the EL module 640, and generate a third EL image 611 having the characteristics of UHD 60fps by applying spatial scalability to the second EL image 609.

According to an embodiment, the receiver may generate a fourth EL image 613 having the characteristics of FHD 30fps 10Mbps by applying SNR scalability to the compressed BL image 605 using the EL module 640. According to an embodiment, the receiver may generate a fifth EL image 615 having the characteristics of UHD 30fps by applying spatial scalability to the fourth EL image 613 using the EL module 640. According to an embodiment, the receiver may generate a sixth EL image 617 having the characteristics of UHD 60fps 80Mbps by applying temporal scalability to the fifth BL image 615 using the EL module 540.

Since the image corresponding to the BL in the receiver has the characteristics of FHD 30fps 5Mbps, for example, the AI network corresponding to temporal scalability may be used to obtain an image of UHD 60fps, and then the AI network corresponding to spatial scalability may be used again for the resulting FHD 60fps to obtain a final image of UHD 60fps. Or, conversely, spatial scalability may be applied first to create UHD 30fps, and then temporal scalability may be applied to create UHD 60fps. The order that may lead to better results may be set or the receiver may choose between the two orders. In an embodiment, the AI network used for spatial scalability of UHD 30fps may be reused as the AI network for spatial scalability, if it is created by considering even a scalability combination in the transmitter, and a new AI network for spatial scalability may be additionally transmitted from the transmitter to the receiver. When the receiver needs to implement an FHD 60fps image instead of a UHD 60fps image or even when the receiver does not have a device capability of processing or displaying up to a UHD image, the receiver may implement the FHD 60fps image by applying temporal scalability.

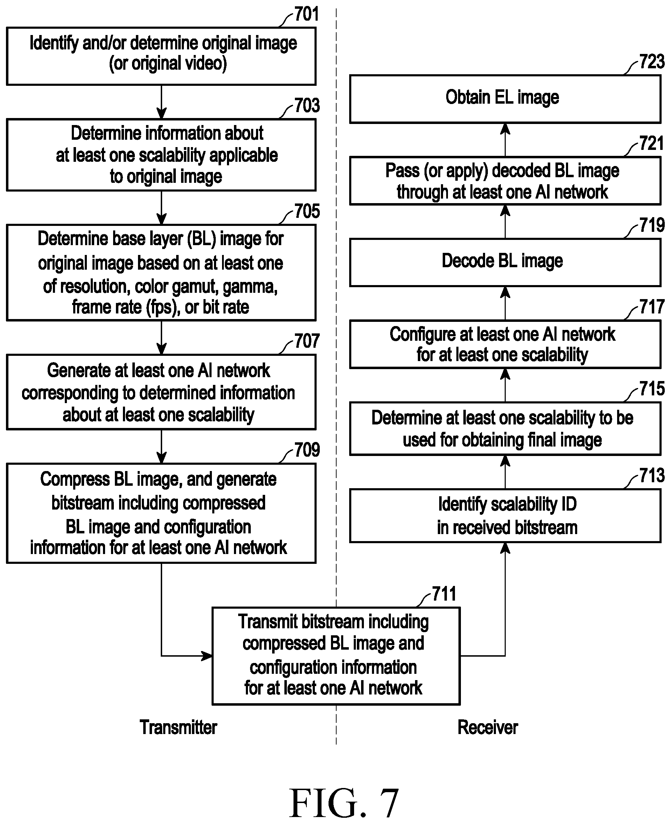

FIG. 7 is a diagram illustrating operations of a transmitter and a receiver according to an embodiment of the disclosure.

In FIG. 7, the transmitter may be implemented as an electronic device (e.g., the electronic device 101 of FIG. 1) that transmits information, a message, and/or a bitstream, and the receiver may be implemented as an electronic device (e.g., the electronic device 102 or the electronic device 104 of FIG. 1) that receives information, a message, and/or a bitstream.

According to an embodiment, the transmitter may include a communication circuit (e.g., the communication module 190 of FIG. 1) and at least one processor (e.g., the processor 120 of FIG. 1) that performs at least one operation described above. According to an embodiment, the receiver may include a communication circuit (e.g., the communication module 190 of FIG. 1) and at least one processor (e.g., the processor 120 of FIG. 1) that performs at least one operation described above.

Referring to FIG. 7, in operation 701, the transmitter may identify and/or determine an original image (or original video). In operation 703, the transmitter may determine information about at least one scalability applicable to the original image. In operation 705, the transmitter may determine a BL image for the original image based on at least one of a resolution, a color gamut, a gamma, a frame rate (fps), a bit depth, or a bit rate. In operation 707, the transmitter may generate at least one AI network corresponding to the determined information about the at least one scalability. According to an embodiment, the transmitter may generate at least one AI network based on at least one of the original image, the information about the at least one scalability for the original image, or the BL image. In operation 709, the transmitter may compress the BL image and generate a bitstream including the compressed BL image and configuration information for the at least one AI network. In operation 711, the transmitter may transmit the bitstream including the compressed BL image and the configuration information for the at least one AI network to the receiver. According to an embodiment, the BL image may have a different view port from an EL image. The BL image and the EL image may be implemented (or generated) to have scalability for multiple views.

In operation 713, the receiver may identify a scalability ID in the bitstream received in operation 711. According to an embodiment, the scalability ID may be included in the configuration information for the AI network. In operation 715, the receiver may determine at least one scalability to be used to obtain a final image. In operation 717, the receiver may configure at least one AI network for the determined at least one scalability. The receiver may configure an AI network of the same type as that of the transmitter by using syntaxes in the configuration information (metadata) for the AI network. The receiver may decode the BL image in operation 719, and pass (or apply) the decoded BL image through the at least one AI network in operation 721. In operation 723, the receiver may obtain an EL image based on a result of operation 721.

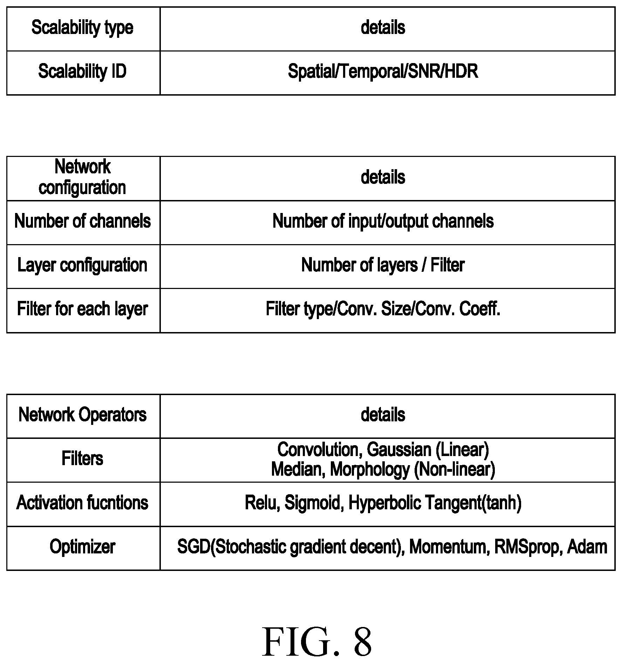

FIG. 8 illustrates an example of AI network configuration information in a bitstream according to an embodiment of the disclosure.

Referring to FIG. 8, the AI network configuration information (or metadata) may include syntax information such as information about a scalability type, information about an AI network configuration, and/or information about operators in the AI network configuration.

The information about the scalability type may include at least one scalability ID. The scalability ID may be any one of spatial, temporal, SNR, and HDR.

The information about the AI network configuration may include at least one of the number of channels, a layer configuration, or a filter for each layer. The number of channels may include information about the number of input channels and/or the number of output channels, the layer configuration may include information about the number of layers and/or filter information, and the filter for each layer may include information about a filter type, a convolution size, and/or a convolution coefficient.

The information about the operators in the AI network configuration may include at least one of filter information, an activation function, or an optimizer. The filter information may include information about at least one of convolution, Gaussian, median, or morphology. The activation function may include at least one of Relu, Sigmoid, or Hyperbolic Tangent (tanh). The optimizer may include at least one of stochastic gradient decent (SGD), Momentum, RMSprop, or Adam.

The AI network configuration information (or metadata) may be information about an AI network to be used or configured in the transmitter and receiver. The AI network configuration information (or metadata) may include information about the type of an AI network used for each frame, when receiving actual image data information, and a parameter value (e.g., filter coefficient) used in the AI network.

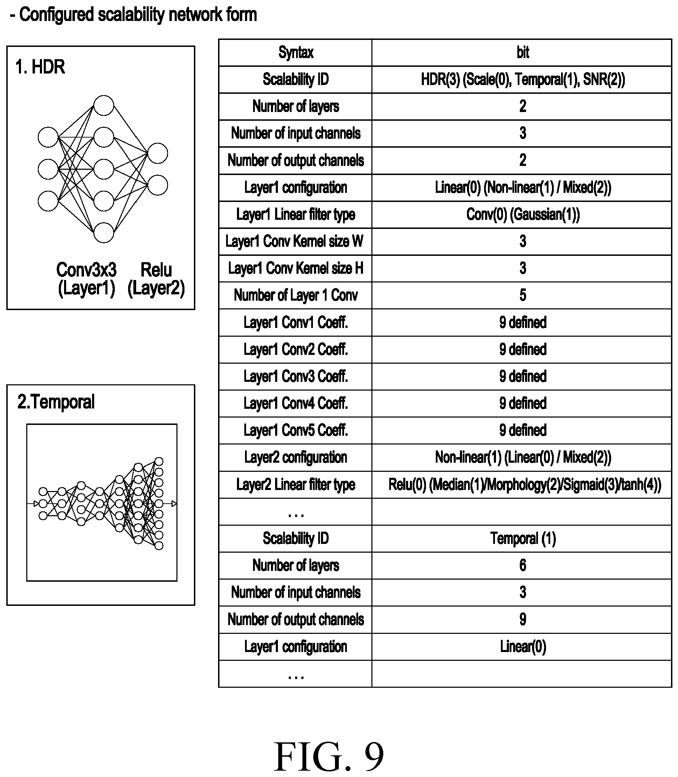

FIG. 9 illustrates an example of AI network configuration information according to an embodiment of the disclosure.

Referring to FIG. 9, the transmitter may transmit AI network configuration information corresponding to two scalabilities to the receiver. FIG. 9 illustrates an example of AI network configuration information in the form of a table, for 1) a case where the scalability ID is HDR (HDR scalability) and 2) a case where the scalability ID is Temporal (temporal scalability). The AI network configuration information illustrated in FIG. 9 is an example for the convenience of description, to which the technical idea of the disclosure is not limited.

For example, in the AI network configuration information for HDR scalability in FIG. 9, the scalability ID may be set to HDR, the number of layers may be set to 2, the number of input channels may be set to 3, and the number of output channels may be set to 2. Layerl configuration may be set to linear, Layer1 linear filter may be set to conv, layer1 Conv kernel size W may be set to 3, layer1 Conv kernel size H may be set to 3, layer1 Conv number may be set to 5, and for each of Layer 1 Conv1 coefficient to Layer 1 Conv 5 coefficient, 9 coefficients may be defined. Layer2 configuration may be set to non-linear, and Layer2 linear filter may be set to Relu.

For example, in the AI network configuration information for temporal scalability in FIG. 9, the scalability ID may be set to temporal, the number of layers may be set to 6, the number of input channels may be set to 3, the number of output channels may be set to 9, and Layer l configuration may be set to linear.

According to an embodiment, when a plurality of layers are configured in AI network configuration information, whether it is a skip connection or a residual connection may be added in a syntax, and in the case of the skip connection, layer indexes where skipping starts and ends may be added.

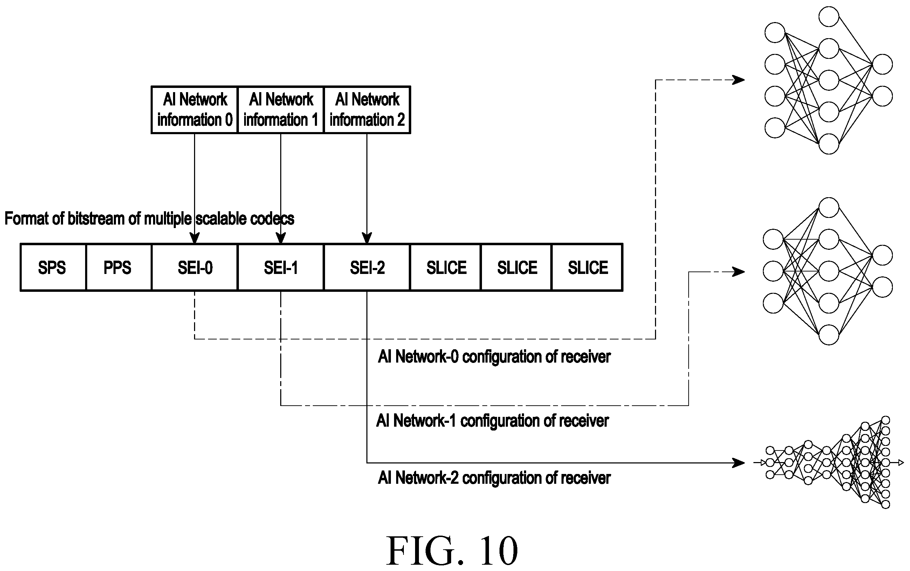

FIG. 10 illustrates an example of bitstream transmission and interpretation in a transmitter and a receiver according to an embodiment of the disclosure.

In FIG. 10, a bitstream of a plurality of scalable codecs may include sequence parameter set (SPS) data, picture parameter set (PPS) data, a plurality of supplemental enhancement information (SEI) data, and a plurality of slice data.

According to an embodiment, the plurality of SEI data may include a first SEI data SEI-0, a second SEI data SEI-1, and a third SEI data SEI-2. The first SEI data SEI-0 may include configuration information for a first AI network (AI Network information 0), the second SEI data SEI-1 may include configuration information for a second AI network (AI Network information 1), and the third SEI data SEI-2 may include configuration information for a third AI network (AI Network information 2).

The transmitter may transmit the bitstream of the plurality of scalable codecs to the receiver. According to an embodiment, the receiver may configure the first AI network based on the configuration information for the first AI network (AI Network information 0) included in the bitstream. According to an embodiment, the receiver may configure the second AI network based on the configuration information for the second AI network (AI Network information 1) included in the bitstream. According to an embodiment, the receiver may configure the third AI network based on configuration information for the third AI network (AI Network information 2) included in the bitstream.

According to an embodiment, the receiver may select at least one of a plurality of scalability IDs using the configuration information for at least one AI network and compressed data of a BL image transmitted from the transmitter, and configure the same AI network as that of the transmitter. According to an embodiment, the receiver may decode the BL image and pass the decoded image through each AI network configured for each scalability, thereby obtaining an image of a scalability to be finally obtained. Alternatively, as described with respect to FIG. 6, the receiver may obtain an image of a scalability to be finally obtained by a combination of a plurality of scalabilities.

According to an embodiment, when the receiver has a limited device capability or performance is satisfied only with the BL image, the receiver may obtain an EL image using only the BL image.

According to an embodiment, the receiver may configure at least one AI network by pre-reading AI network information at a position independent of that of encoded frame data in the bitstream.

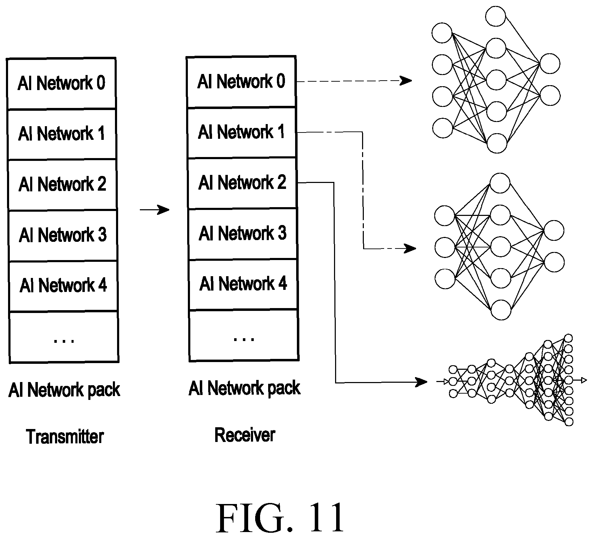

FIG. 11 illustrates an exemplary method of pre-transmitting and configuring AI IDs and information about networks in a package according to an embodiment of the disclosure.

While FIG. 10 illustrates a method of transmitting all configuration information for an AI network transmitted together in a bitstream of an image, FIG. 11 illustrates a method of transmitting a package corresponding to an AI network before a bitstream of an image, in consideration of a delay time involved in configuring the AI network in the receiver.

Referring to FIG. 11, the transmitter may transmit an AI network package including configuration information for a plurality of AI networks, AI Network 0 to AI Network 4 to the receiver before transmitting a bitstream of an image. The receiver may pre-configure at least one AI network using the pre-received AI network package.

According to an embodiment, when the transmitter pre-transmits the AI network package to the receiver, the transmitter may not transmit AI network configuration information separately, when transmitting the bitstream of the image. According to an embodiment, in the case where the transmitter pre-transmits the AI network package to the receiver, when transmitting the bitstream of the image, the transmitter may transmit, to the receiver, an AI network index indicating information on a scalability, for each scalability, and a coefficient value and/or a weight to be used in an AI network as information about each AI network as in the example of FIG. 8.

According to an embodiment, the transmitter may identify whether the configuration of the transmitted AI network package is fully prepared in the receiver through communication with the receiver, and transmit the bitstream of the image at a time after the identification. According to an embodiment, a single AI network for each scalability may be fixed throughout the image and updated in the middle of an image sequence.

According to an embodiment, considering a time required for the receiver to configure the updated AI network, the transmitter may transmit the configuration information for the AI network to the receiver before frame data to be applied to the updated network. The configuration information for the AI network may include information indicating a frame up to which the existing AI network should be applied and/or a frame from which the new AI network should be applied. The information indicating the frame from which the new AI network is to be applied may be a decoding order or a display order. According to an embodiment, the new AI network may be predefined to be applied from an N^{th} frame or later after a current frame.

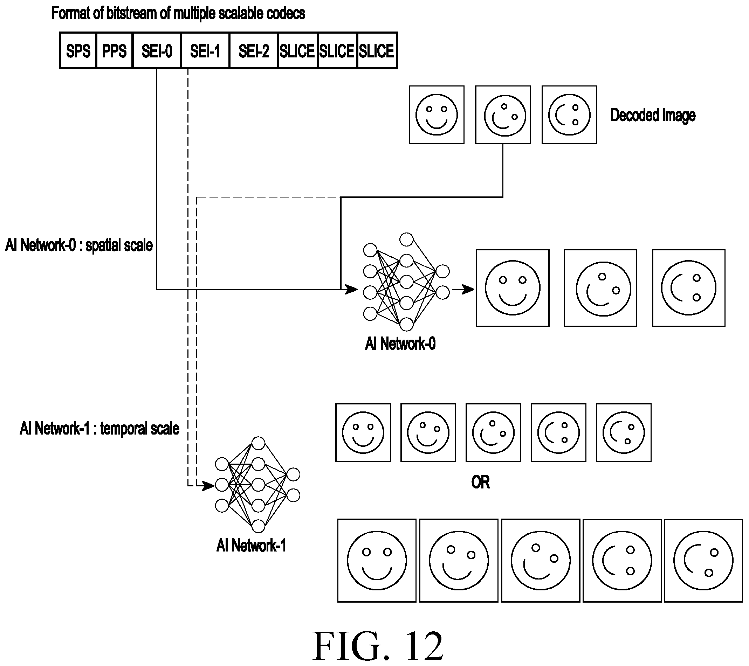

FIG. 12 illustrates an example of configuring and processing an AI network in a receiver according to an embodiment of the disclosure.

FIG. 12 illustrates an example of obtaining a final image (or EL image) corresponding to a scalability after configuring an AI network using a received bitstream in a receiver, as in FIG. 10.

A bitstream of a plurality of scalable codecs transmitted from the transmitter to the receiver may include SPS data, PPS data, a plurality of SEI data, and a plurality of slice data.

The receiver may decode a BL image based on the bitstream of the plurality of scalable codecs. For example, when the BL image is an FHD 30fps image, the receiver may configure a first AI network, AI Network-0 for spatial scalability and/or a second AI network, AI Network-1 for temporal scalability by interpreting the received bitstream. The receiver may obtain an EL image of UHD 30fps by passing a decoded BL image of FHD 30fps through the first AI network, AI Network-0. The receiver may obtain an EL image of FHD 60fps by passing the decoded BL image of FHD 30fps through the second AI network, AI Network-1. Alternatively, as in the example of FIG. 6, a final EL image of UHD 60fps may be obtained by passing the image through the second AI network after passing through the first AI network. The transmitter may additionally transmit additional information indicating whether a plurality of AI networks may be used in combination in this manner, and as described before, in order to ensure image quality performance in this case, learning may also be performed in a combined state, when the transmitter generates the corresponding network, so that each AI network may be effective even in the combined form. Alternatively, as in the example of FIG. 5, each independent AI network may be transmitted to obtain the final EL image.

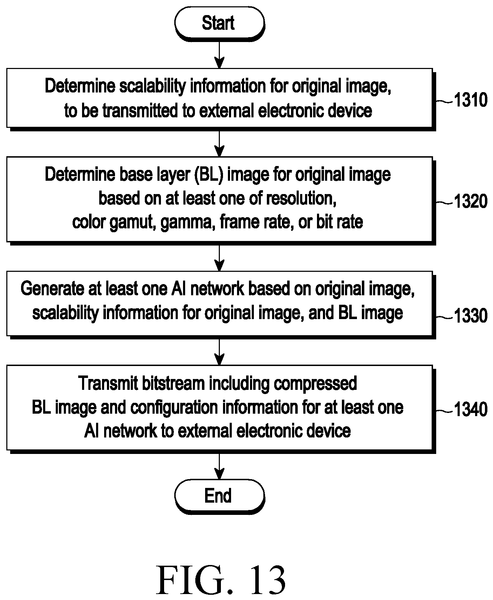

FIG. 13 is a diagram illustrating an operation of a transmitter according to an embodiment of the disclosure.

The transmitter (e.g., the electronic device 101 of FIG. 1) may include a communication circuit (e.g., the communication module 190 of FIG. 1) and at least one processor (e.g., the processor 120 of FIG. 1) that performs at least one operation described above.

Referring to FIG. 13, in operation 1310, the transmitter (e.g., the electronic device 101 of FIG. 1) may determine information on a scalability for an original image, to be transmitted to an external electronic device (e.g., the electronic device 102 or the electronic device 104 of FIG. 1) using the at least one processor (e.g., the processor 120 of FIG. 1). In operation 1320, the transmitter may determine a BL image for the original image, based on at least one of a resolution, a color gamut, a gamma, a frame rate, a bit depth, or a bit rate using the at least one processor (e.g., the processor 120 of FIG. 1). In operation 1330, the transmitter may generate at least one AI network based on the original image, the information on the scalability for the original image, and the BL image, using the at least one processor (e.g., the processor 120 of FIG. 1). In operation 1340, the transmitter may transmit a bitstream including a compressed BL image and configuration information for the at least one AI network to the external electronic device, using the communication circuit (e.g., the communication module 190 of FIG. 1). According to an embodiment, the BL image may have a different view port from an EL image. The BL image and the EL image may be implemented (or generated) to have scalability for multiple views.

According to an embodiment, the configuration information for the at least one AI network may include at least one of information about a scalability ID, information about an AI network configuration, or information about operators in the AI network configuration. According to an embodiment, the information about the AI network configuration may include at least one of the number of channels, a layer configuration, or a filter for each layer. According to an embodiment, the information about the operators in the AI network configuration may include at least one of filter information, an activation function, or an optimizer.

According to an embodiment, the bitstream may include SPS data, PPS data, and a plurality of SEI data. According to an embodiment, each of the plurality of SEI data may include configuration information for a different AI network. According to an embodiment, the scalability may be any one of spatial scalability, temporal scalability, SNR scalability, a hybrid codec, color gamut scalability, and HDR scalability.

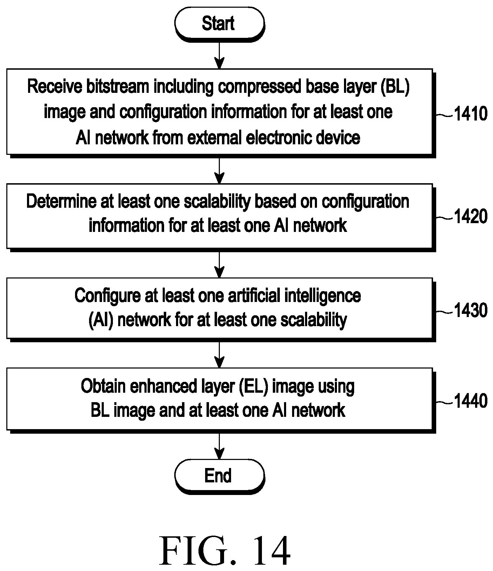

FIG. 14 is a diagram illustrating an operation of a receiver according to an embodiment of the disclosure.

The receiver may include a communication circuit (e.g., the communication module 190 of FIG. 1) and at least one processor (e.g., the processor 120 of FIG. 1) that performs at least one operation described above.

Referring to FIG. 14, in operation 1410, the receiver (e.g., the electronic device 101 of FIG. 1) may receive a bitstream including a compressed BL image and configuration information for at least one AI network from an external electronic device (e.g., the electronic device 102 or the electronic device 104 of FIG. 1), using the communication circuit (e.g., the communication module 190 of FIG. 1). In operation 1420, the receiver may determine at least one scalability based on the configuration information for the at least one AI network, using the at least one processor (e.g., the processor 120 of FIG. 1). In operation 1430, the receiver may configure at least one AI network for the at least one scalability, using the at least one processor (e.g., the processor 120 of FIG. 1). In operation 1440, the receiver may obtain an EL image using the BL image and the at least one AI network through the at least one processor (e.g., the processor 120 of FIG. 1).

According to an embodiment, in a computer-readable storage medium storing at least one instruction, the at least one instruction may, when executed by at least one processor, cause an electronic device to perform a plurality of operations. The plurality of operations may include determining information on a scalability applicable to an original image, to be transmitted to an external electronic device. The plurality of operations may include determining a BL image for the original image, based on at least one of a resolution, a color gamut, a gamma, a frame rate, a bit depth, or a bit rate. The plurality of operations may include generating at least one AI network, based on the original image, the information on the scalability for the original image, and the BL image. The plurality of operations may include transmitting a bitstream including a compressed BL image and configuration information for the at least one AI network to the external electronic device.

According to an embodiment, in a computer-readable storage medium storing at least one instruction, the at least one instruction may, when executed by at least one processor, cause an electronic device to perform a plurality of operations. The plurality of operations may include receiving, from an external electronic device, a bitstream including a compressed BL image and configuration information for at least one AI network. The plurality of operations may include determining at least one scalability based on the configuration information for the at least one AI network. The plurality of operations may include configuring at least one AI network for the at least one scalability. The plurality of operations may include obtaining an EL image using the BL image and the at least one AI network.

In the disclosure, there is no limitation on the AI network configuration, and various AI networks may be implemented according to design specifications. According to an embodiment, since network complexity may increase due to the freedom of configuring an AI network, the transmitter and/or the receiver may pre-set a list of a plurality of AI networks. According to an embodiment, the transmitter (or the receiver) may select a suitable AI network from the list of the plurality of AI networks and transmit selection information to the receiver (or the transmitter). According to an embodiment, the selection information may simply include the index of a corresponding AI network. According to an embodiment, the transmitter and/or the receiver may modify information about some networks after selecting the AI network.

In the disclosure, SVC-based images have been mainly described for convenience of description, but the technical idea of the disclosure may also be applied to still images (e.g., JPEG, BMP, HEIF, etc.) and/or GIF. According to an embodiment, an image corresponding to an additional scalability may be obtained by selectively passing a still image as a basis, such as JPEG, through an AI network, and in addition to the afore-described spatial, temporal, SNR, gamut and bit-depth, HDR, depth-based outfocusing, and various filter effects may be obtained as a result image. According to an embodiment, in the case of a still image, a compressed or uncompressed original still image in a bitstream may be used as a BL image.

According to an embodiment, AI network configuration information may be transmitted at a specific position before actual image information in a bitstream of an image. According to an embodiment, at least one AI network package including the AI network configuration information may be first transmitted from the transmitter to the receiver, and the receiver may configure an AI network using the previously received AI network package. Thereafter, the receiver may obtain a result image for a final scalability after network processing using network index information and other information to be used (a coefficient value, a weight value, and so on) for a network, transmitted in the bitstream of the image. The values corresponding to the other information may be updated in the bitstream, as needed.

The embodiments of the disclosure are not limited to scalable codecs, and may also be applied when AI network information is transmitted from a transmitter to a receiver and the receiver restores and/or uses an AI network.

According to an embodiment, an electronic device (101 of FIG. 1) may include a communication circuit (190 of FIG. 1), and a processor (120 of FIG. 1) connected to the communication circuit (190 of FIG. 1). The at least one processor (120 of FIG. 1) may generate at least one AI network for a target image. The at least one processor (120 of FIG. 1) may transmit configuration information for the at least one AI network to an external electronic device, so that the at least one AI network for the target image is restored in the external electronic device.

According to an embodiment, an electronic device (101 of FIG. 1) may include a communication circuit (190 of FIG. 1); and at least one processor (120 of FIG. 1) connected to the communication circuit (190 of FIG. 1). The at least one processor (120 of FIG. 1) may receive configuration information for at least one AI network for a target image from an external electronic device. The at least one processor (120 of FIG. 1) may restore the at least one AI network for the target image based on the configuration information for the at least one AI network.

## Claims

1. An electronic device (101 of FIG. 1) comprising:
a communication circuit (190 of FIG. 1);
a processor (120 of FIG. 1); and
memory (130 of FIG. 1),
wherein the memory (130 of FIG. 1) stores instructions that, when executed by the processor (120 of FIG. 1), cause the electronic device (101 of FIG. 1) to:
determine information on a scalability applicable to an original image,
generate a base layer (BL) image for the original image, based on at least one of a resolution, a color gamut, a gamma, a frame rate, a bit depth, or a bit rate of the original image,
generate at least one artificial intelligence (AI) network, based on the original image, the information on the scalability for the original image, and the BL image, and
compress the BL image, and control the communication circuit to transmit a bitstream including the compressed BL image and configuration information for the at least one AI network to an external electronic device.

2. The electronic device of claim 1, wherein the configuration information for the at least one AI network includes at least one of information on a scalability ID, information on an AI network configuration, or information on operators in the AI network configuration.

3. The electronic device of claim 1 or 2, wherein the information on the AI network configuration includes at least one of a number of channels, a layer configuration, or a filter for each layer.

4. The electronic device of any one of claims 1 to 3, wherein the information on the operators in the AI network configuration includes at least one of filter information, an activation function, or an optimizer.

5. The electronic device of any one of claims 1 to 4, wherein the bitstream includes sequence parameter set (SPS) data, picture parameter set (PPS) data, and one or more supplemental enhancement information (SEI) data.

6. The electronic device of any one of claims 1 to 5, wherein the scalability is any one of spatial scalability, temporal scalability, signal-to-noise ratio (SNR) scalability, a hybrid codec, color gamut scalability, and HDR scalability.

7. An electronic device (101 of FIG. 1) comprising:
a communication circuit (190 of FIG. 1);
a processor (120 of FIG. 1); and
memory (130 of FIG. 1),
wherein the memory (130 of FIG. 1) stores instructions that, when executed by the processor (120 of FIG. 1), cause the electronic device (101 of FIG. 1) to:
receive, from an external electronic device, a bitstream including a compressed base layer (BL) image and configuration information for at least one artificial intelligence (AI) network,
determine at least one scalability based on the configuration information for the at least one AI network,
configure at least one AI network for the at least one scalability, and
obtain an enhanced layer (EL) image using the BL image and the at least one AI network.

8. The electronic device of claim 7, wherein the configuration information for the at least one AI network includes at least one of information on a scalability ID, information on an AI network configuration, or information on operators in the AI network configuration.

9. The electronic device of claim 7 or 8, wherein the information on the AI network configuration includes at least one of a number of channels, a layer configuration, or a filter for each layer, and
wherein the information on the operators in the AI network configuration includes at least one of filter information, an activation function, or an optimizer.

10. The electronic device of any one of claims 7 to 9, wherein the bitstream includes sequence parameter set (SPS) data, picture parameter set (PPS) data, and one or more supplemental enhancement information (SEI) data.

11. The electronic device of any one of claims 7 to 10, wherein the scalability is any one of spatial scalability, temporal scalability, signal-to-noise ratio (SNR) scalability, a hybrid codec, color gamut scalability, and HDR scalability.

12. A method of operating an electronic device (101 of FIG. 1), comprising:
determining information on a scalability applicable to an original image;
generating a base layer (BL) image for the original image, based on at least one of a resolution, a color gamut, a gamma, a frame rate, a bit depth, or a bit rate of the original image;
generating at least one artificial intelligence (AI) network, based on the original image, the information on the scalability for the original image, and the BL image; and
compressing the BL image, and transmitting a bitstream including the compressed BL image and configuration information for the at least one AI network.

13. A method of operating an electronic device (101 of FIG. 1), comprising:
receiving a bitstream including a compressed base layer (BL) image and configuration information for at least one artificial intelligence (AI) network;
determining at least one scalability based on the configuration information for the at least one AI network;
configuring at least one AI network for the at least one scalability; and
obtaining an enhanced layer (EL) image using the BL image and the at least one AI network.

14. A computer-readable storage medium storing at least one instruction that, when executed by at least one processor, causes an electronic device to perform a plurality of operations,
wherein the plurality of operations include:
determining information on a scalability applicable to an original image;
generating a base layer (BL) image for the original image, based on at least one of a resolution, a color gamut, a gamma, a frame rate, a bit depth, or a bit rate of the original image;
generating at least one artificial intelligence (AI) network, based on the original image, the information on the scalability for the original image, and the BL image; and
compressing the BL image, and transmitting a bitstream including the compressed BL image and configuration information for the at least one AI network.

15. A computer-readable storage medium storing at least one instruction that, when executed by at least one processor, causes an electronic device to perform a plurality of operations,
wherein the plurality of operations include:
receiving a bitstream including a compressed base layer (BL) image and configuration information for at least one artificial intelligence (AI) network;
determining at least one scalability based on the configuration information for the at least one AI network;
configuring at least one AI network for the at least one scalability; and
obtaining an enhanced layer (EL) image using the BL image and the at least one AI network.
